# EUROPÄISCHE PATENTANMELDUNG

(11) **EP 2 767 206 A1**
(43) Veröffentlichungstag der Anmeldung: **20.08.2014**
(21) Anmeldenummer: 14155082.2
(22) Anmeldetag: 13.02.2014
(51) Int. Cl.: A47L 11/40

(54) **Mobiles Flächenbehandlungsgerät**

(30) Priorität: 13.02.2013 DE 102013101440
(71) Anmelder: Leifheit AG, 56377 Nassau (DE)
(72) Erfinder: Fischer, Klaus-Jürgen, 56379 Holzappel (DE)
(74) Vertreter: Bungartz, Klaus Peter

(57) **Zusammenfassung**

Die Erfindung betrifft ein mobiles Flächenbehandlungsgerät mit einem Träger (1), der längs einer zu behandelnden Fläche (11) verfahrbar ist, wobei an dem Träger (1) zumindest ein Arbeitselement (10) angeordnet ist und das Flächenbehandlungsgerät über ein von einem Motor (9) angetriebenen, hinsichtlich der Lenkung instabilen Antriebselement (12) angetrieben ist. Zur Bildung eines Vorlaufs ist die Lauffläche eines Antriebsrades (2) auf der Fläche (11) außerhalb der Lenkachse (A) angeordnet und der Antrieb mit dem Träger über ein als Taumellager ausgebildetes Lenkwellenlager (4) verbunden.

Die bekannten Flächenbehandlungsgeräte haben den Nachteil, dass es einige wenige Positionen gibt, in denen sie sich festfahren können. Dies verbessert die Erfindung dadurch, dass die Antriebsachse (A) des Fahrwerks eine Achsverlängerung (8) aufweist, an der ein Zusatzrad (7) angeordnet ist, das relativ zum Antriebsrad (2) wenigstens in zur Antriebsachse (A) axialer Richtung beweglich ist.

## Beschreibung

### Technisches Gebiet

Die Erfindung betrifft ein selbsttätig und willkürlich eine Fläche abfahrendes, mobiles Flächenbehandlungsgerät zur reinigenden, pflegenden oder bearbeitenden Behandlung der Fläche. Die gattungsgemäßen Flächenbehandlungsgeräte weisen dabei zumindest ein, an einem Träger angeordnetes Arbeitselement zur Behandlung der Fläche und zumindest ein, über einen Motor angetriebenes und hinsichtlich der Lenkung instabiles Antriebselement auf, wobei dieses Antriebselement mit dem Träger beweglich verbunden ist und den Träger selbsttätig in verschiedene Richtungen über die Fläche zu bewegen vermag.

Das Antriebselement des gattungsgemäßen Flächenbehandlungsgerätes weist einen Fahrwerkskörper mit einer von dem Motor angetriebenen Antriebsachse mit wenigstens einem Antriebsrad auf, der über ein Lenkwellenlager und eine Lenkwelle mit dem Träger verbunden ist und um eine Lenkachse drehbar sowie derart ausgebildet oder gelagert ist, dass zur Bildung eines Vorlaufs die Lauffläche des Antriebsrades auf der Fläche außerhalb der Lenkachse liegt. Das Lenkwellenlager ist hier als Taumellager ausgebildet, in dem die Lenkwelle gehalten ist und um das die Lenkwelle schwenkbar ist.

### Stand der Technik

Derartige mobile Flächenbehandlungsgeräte sind aus der EP 2 481 333 B1 bekannt, das einen Träger aufweist, der im Inneren wiederum einen Hohlraum aufweist. In diesem Hohlraum ist der Motor angeordnet, der seine Antriebskraft über das Antriebsrad überträgt. Der Träger kann ein Bearbeitungselement, zum Beispiel in Form eines Wischtuchs, bürstenartigen Mobs oder eine Schwamms, aufweisen, das auf der Fläche aufliegt.

Damit das Flächenbehandlungsgerät selbsttätig und willkürlich eine Fläche abfahren kann, also willkürlich seine Bewegungsrichtung verändert, ist das Lenkwellenlager als Taumellager ausgebildet. Die bedeutet zum Beispiel, dass das Taumellager von einem hohlzylindrischen Durchlass gebildet sein kann, durch den die Lenkwelle geführt ist. Dies führt dazu, dass der Fahrwerkskörper in der Lagerung beweglich ist und nicht definiert gelagert ist. Da gleichzeitig das Antriebsrad einen Vorlauf bzw. einen Nachlauf aufweist, also mit seiner Auflagefläche auf der zu behandelnden Fläche außerhalb der Lenkachse A angeordnet ist, entsteht ein instabiler Zustand, der zu einer willkürlichen Richtungsänderung führt, insbesondere aber das Flächenbehandlungsgerät in die Lage versetzt, bei Anstoßen an ein Hindernis durch eine entsprechende Eigenbewegung des Fahrwerkträgers in eine neue Richtung zu verfahren.

Obwohl das bekannte Flächenbehandlungsgerät recht zuverlässig die zu behandelnde Fläche willkürlich abfährt und auch dann, wenn es eine Ecke oder eine Wand erreicht, durch das Lagerspiel in eine von der Ecke oder der Wand abgewandte Richtung weiterzufahren vermag, kann es doch Situationen geben, in denen sich das Flächenbehandlungsgerät festfährt, also nicht mehr in der Lage ist, durch die kippende Lenkachse alleine in eine andere Richtung zu fahren.

Ein mobiler Roboter zum Staubwischen ist aus der europäischen Patentschrift EP 1347701 B bekannt. Dieser weist ein glockenartiges Gehäuse mit einer Antriebsvorrichtung auf, die eine willkürliche Bewegung des Roboters durch den Raum hindurch ermöglicht. Hierzu ist die Antriebsvorrichtung nicht mit dem eigentlichen Gehäuse verbunden und besteht aus einer Kugel die mit exzentrischem Schwerpunkt motorisch angetrieben ist, so dass die Kugel unterschiedliche Bewegungsbahnen abfährt. Dabei nimmt sie das Gehäuse und den mobilen Roboterjeweils mit und versetzt diesen in die Lage, willkürlich verschiedene Richtungen innerhalb des Raumes abzufahren, um so nach einer gewissen Arbeitsperiode die gesamte Fläche des Raums überfahren zu haben.

Nachteil der bekannten Flächenbehandlungsgeräte besteht darin, dass der Antrieb und das eigentliche Gerät zweiteilig ausgebildet sind, so dass zum einen der Eindruck entsteht, dass innerhalb des Gerätes bei Richtungsumkehr zunächst ein Stillstand eintreten würde, bis die Kugel innerhalb des Gehäuses an eine gegenüberliegende Fläche anstößt, und zum anderen durch die freie Beweglichkeit der Kugel innerhalb des Gehäuses ein Stoßen auftritt, wenn die Kugel nach Durchlaufen des Gehäuseinnenraums der gegenüberliegenden Seite wieder anschlägt. Darüber hinaus besteht natürlich die Gefahr, dass das separate Antriebselement bei Einsatz des Flächenbehandlungsgerätes nicht wiedergefunden wird oder verloren geht, da es vom Flächenbehandlungsgerät getrennt ist.

Aus der GB 2 411 820 A ist ein mobiles Bodenreinigungsgerät bekannt, dass eine Fläche selbsttätig abfahren kann und bei Anstoßen an ein Hindernis seine Fahrtrichtung selbsttätig zu ändern vermag. Hierzu ist die Antriebsachse an einem federnd im Gehäuse angeordneten Achsträger vorgesehen, der bei Geradeausfahrt durch die Federkraft verriegelt ist und im Falle des Auftreffens auf ein Hindernis über ein Entriegelungsmittel aus der Verriegelung gelöst werden kann. Hierdurch wird die Lenkachse freigegeben und Fahrzeug kann in eine andere Richtung fahren. Im Geradeauslauf dagegen wird die Lenkachse durch den Nachlauf wieder gerade gestellt, so dass die Verriegelung wieder einrastet und das Bodenreinigungsgerät gerade bewegt wird.

Der Nachteil dieses Bodenreinigungsgeräts besteht zum einen darin, dass es immer geradeaus fährt, solange es nicht gegen ein Hindernis stößt. Dies bedingt aber eine Vielzahl von Bewegungen, bis der Boden vollständig abgefahren ist, da eine Richtungsänderung während der Fahrt ohne Hindernis nicht möglich ist.

Ein weiterer Nachteil besteht darin, dass die Verriegelung der Lenkachse bei Auftreffen auf ein Hindernis zwar gelöst wird, jedoch dadurch nicht sichergestellt ist, dass das Fahrzeug in allen Fällen selbsttätig einen Ausweg aus der Blockierstellung findet, wenn es zum Beispiel frontal vor eine Wand fährt oder in einer Ecke festsitzt. Zwar kann durch die Entriegelung die Lenkachse nun einlenken, dies verhindert aber nicht, dass die Kräfte zum Einlenken in genau die Gegenkräfte wirken, die von dem Hindernis ausgelöst werden. Dies lässt sich nur über eine ungleichmäßige Verteilung der Antriebkräfte an der Achse erzielen, was aber den Nachteil hat, dass das Fahrzeug sich entlang der Wand quer zur ursprünglichen Fahrtrichtung bewegt, wenn es sich soweit gedreht hat, dass die Blockierstellung aufgehoben ist.

Die DE 10 2005 057 635 A zeigt ein Fahrzeug, beispielsweise für Staubsauger oder Rasenmäher, mit einem Fahrgestell, das durch mindestens drei an diesem angebrachten Räder auf dem Untergrund abgestützt ist, mit den einzelnen Rädern jeweils zugeordneten Antriebsmotoren und mit mindestens einer Steuereinrichtung, durch die die Antriebsmotoren getrennt voneinander und/oder gemeinsam aktivierbar sind, soll die Rangier- und die Antriebsart optimiert und verbessert sein. Dies wird dadurch erzielt, dass mindestens eines der Räder über einen Auslegearm am Fahrgestell drehbar abgestützt ist und dass der Auslegearm um eine senkrecht zum Untergrund gerichtete Achse verschwenkbar gelagertist.

Die DE 10 2004 038 074 B3 beschreibt einen selbstfahrenden und selbststeuernden Reinigungsroboter mit einer Reinigungseinheit zum Reinigen einer Bodenfläche und mit einer Antriebseinheit zum Verfahren des Reinigungsroboters, wobei die Antriebseinheit ein Laufrad umfasst, das um eine Drehachse drehend antreibbar und um eine exzentrisch zum Laufrad angeordnete, senkrecht zur Bodenfläche ausgerichtete Lenkachse verschwenkbar ist. Das Laufrad ist permanent drehend antreibbar und rollt bei Auftreffen des Reinigungsroboters auf ein Hindernis auf der Bodenfläche ab, wobei es entgegen der Wirkung einer Rückstellkraft bogenförmig um die Lenkachse verschwenkt.

### Kurzbeschreibung der Erfindung

Aufgabe der Erfindung ist es ein willkürlich eine Fläche abfahrendes, mobiles Flächenbehandlungsgerät der eingangs genannten Art derart weiterzubilden, dass ein Festfahren in einer Ecke oder an einer Wand noch besser vermieden wird.

Diese Aufgabe wird nach der Erfindung dadurch gelöst, dass die Antriebsachse eine Achsverlängerung aufweist, an der ein Zusatzrad angeordnet ist, das relativ zum Antriebsrad wenigstens in zur Antriebsachse axialer Richtung beweglich ist.

Durch die erfindungsgemäße Ausgestaltung des Flächenbehandlungsgerätes werden die Situationen, in denen das Flächenbehandlungsgerät nicht mehr in der Lage ist, sich von einer vor ihm stehenden Fläche oder Ecke zu entfernen, nochmals verringert.

Erfindungsgemäß ist hierzu das Zusatzrad vorgesehen, das an der Achsverlängerung befestigt ist. Grundsätzlich wäre es schon möglich, durch das Zusatzrad alleine, auch wenn dieses axial festgelegt sein sollte, einen zusätzlichen Antriebseinfluss zu erzeugen, der im Falle der Blockade durch ein vor dem Flächenbehandlungsgerät stehendes Hindernis dafür Sorge trägt, dass sich das Gerät schräger stellt und so wieder frei kommen kann. Die axiale Verschiebbarkeit und weitere Maßnahmen können diesen Effekt aber deutlich verbessern.

Die Achsverlängerung ist üblicherweise eine Verlängerung der Antriebsachse in axialer Richtung. Sie kann aber auch einen seitlichen Versatz nach hinten oder vorne mit sich bringen, so dass die Antriebskraft dann von der Antriebsachse über entsprechende Mittel, zum Beispiel ein Zahnradgetriebe, auf die Achsverlängerung übertragen wird. Im letztgenannten Fall wird dann die Achsverlängerung als selbstständige Achse ausgebildet sein, die am Fahrwerkskörper gelagert ist.

In den meisten Fällen wird jedoch die Achsverlängerung entweder einfach darin bestehen, dass die Antriebsachse länger ausgebildet ist oder dass eine zusätzliche Achse in die Antriebsachse eingesteckt bzw. auch diese aufgesteckt ist. Sofern die Achsverlängerung fest mit der Antriebsachse verbunden ist, wird die axiale Beweglichkeit des Zusatzrades relativ zur Antriebsachse dadurch realisiert, dass das Zusatzrad axial auf der Achsverlängerung verschiebbar gehalten ist.

Alternativ kann dagegen auch die Achsverlängerung selbst relativ zur Antriebsachse verschiebbar sein. Dies kann zum Beispiel dadurch realisiert werden, dass die Antriebsachse zumindest im Bereich des Endes, an dem die Achsverlängerung angeordnet ist, hohlzylindrisch ausgebildet ist. Sofern dieser hohlzylindrische Bereich lang genug ist, kann eine Passung mit dem Ende der hierin eingesteckten Achsverlängerung realisiert werden, wobei die Achsverlängerung dann sowohl tiefer als auch weniger tief in den hohlzylindrischen Bereich verschiebbar ist. Natürlich kann auch in diesem Fall das Zusatzrad axial verschiebbar auf der Achsverlängerung angeordnet sein. Alternativ kann das Zusatzrad aber auch bei einer einfachen Ausgestaltung zusammen mit der Achsverlängerung ein gemeinsames Bauteil, zum Beispiel ein im Spritzguss hergestelltes Kunststoffteil, sein.

Natürlich kann in geometrischer Umkehr auch die Achsverlängerung von einem hohlzylindrischen Bauteil gebildet sein, in das dann die Antriebsachse eingesteckt ist. Das Zusatzrad wird bei einer bevorzugten Ausgestaltung zusammen mit dem Antriebsrad angetrieben, d.h. die Verbindung zwischen Antriebswelle und Achsverlängerung ist in diesem Fall drehfest. Falls gewünscht kann über eine entsprechende Fassung eines rotationssymmetrischen Endes des einen Bauteils mit einem rotationssymmetrischen Ende des anderen Bauteils auch ein gewisser Schlupf eingestellt bzw. toleriert werden, so dass das Antriebsrad mit anderen Drehzahlen betrieben werden kann, als das Zusatzrad. Dies kann dann, wenn die Achsverlängerung von einer separaten Achse gebildet ist, auch über ein zwischengeschaltetes Getriebe realisiert werden.

Grundsätzlich kann es wünschenswert sein, dass das Zusatzrad neben einer gewissen Antriebskraft zusätzliche Einflüsse auf die Fortbewegung des Flächenbehandlungsgerätes ausübt. Während bei üblichen Fahrzeugen der Antrieb möglichst geradlinig und harmonisch sein soll, kommt es bei einem Reinigungsgerät hierauf eher nicht an. Im Gegenteil, je nach Anwendung kann sogar ein oszillierendes Lenkverhalten erwünscht sein, dass durch eine zusätzliche Relativbewegung zwischen dem Arbeitselement und der zu behandelnden Fläche realisierbar ist. Dieses Stören des Geradeauslaufes führt dann, wenn das Flächenbehandlungsgerät gegen ein Hindernis stößt, zusätzlich dazu, dass die hierdurch bewirkte Querbeschleunigung ein selbsttätiges Befreien aus der Blockierstellung ermöglicht.

Darüber hinaus kann das Zusatzrad auch eine andere Abrollrichtung aufweisen als das Antriebsrad. Während dies bei normalen Fahrzeugen ebenfalls nicht erwünscht ist, weil hierdurch eines der beiden Räder rutschend über den Boden bewegt werden würde, kann dies im Falle eines Reinigungsgerätes, das vergleichsweise leicht ist, durchaus toleriert werden. Diese unterschiedlichen Kräfte bewirken jedoch, dass dann, wenn in Vortriebsrichtung des Antriebsrades ein Hindernis erreicht wird, eine zusätzliche Kraftrichtung vorhanden ist, die das Flächenbehandlungsgerät in eine andere Richtung drängt.

Ein ähnlicher Effekt kann dadurch erzielt werden, dass die Achsverlängerung elastisch und biegsam ausgebildet ist, so dass die Kontaktkraft zwischen dem Boden und dem Zusatzrad dann, wenn das Flächenbehandlungsgerät von einem Hindernis aufgehalten wird, dazu führt, dass die elastische und biegsame Achsverlängerung gebogen wird, so dass das Zusatzrad eine zusätzliche Kraftkomponente aufzubringen vermag.

Bei einer bevorzugten Ausgestaltung weist das mobile Flächenbehandlungsgerät einen Antriebsblock auf, der den Fahrwerkskörper bildet. Dies kann zum Beispiel ein geschlossener Käfig sein, in dem der Motor, das Taumellager sowie das Antriebsrad gehalten sind. Die Achsverlängerung ist dann aus diesem Antriebsblock herausgeführt, so dass das Zusatzrad seitlich neben dem Antriebsblock angeordnet ist. Der Träger kann zum Beispiel glockenartig ausgebildet sein und an seinem unteren Rand mit einem oder mehreren Arbeitselementen versehen sein.

Ist das axiale Spiel dadurch realisiert, dass die Achsverlängerung axialverschiebbar ist, kann die Begrenzung des Verschiebeweges durch die innere Oberfläche der glockenartigen Form des Trägers realisiert werden. Hierzu ist die Geometrie so gewählt, dass bei maximalem Auszugsweg, also dann, wenn das Zusatzrad an die innere Fläche der Glocke des Trägers anstößt, die Achsverlängerung immer noch tief genug in den hohlzylindrischen Endbereich der Antriebsachse eingesteckt ist, um ein Herausfallen zu vermeiden.

Die oben erwähnten zusätzlichen Antriebseinflüsse in Querrichtung können über zusätzliche Mittel realisiert werden. Dies kann zum Beispiel eine gewollte statische Unwucht sein, so dass das Zusatzrad während der Drehung flattert. Ein zu geradliniger Bewegungsablauf kann ferner dadurch vermieden werden, dass die Reibwerte der Lauflächen des Antriebsrades und des Zusatzrades unterschiedlich sind. Ferner kann neben einem ebenen Rad als Antriebsrad oder Zusatzrad auch ein Rad gewählt werden, dessen Abwicklung des äußeren Randes nicht geradlinig, sondern zum Beispiel sinusförmig ist. Auf dies führt zu einer schlingernden Bewegung des Flächenbehandlungsgerätes.

Das Zusatzrad kann die gleiche Dicke aufweisen wie das Antriebsrad. Alternativ kann das Zusatzrad aber auch deutlich dünner gehalten werden, da es lediglich einen zusätzlichen Antriebseinfluss ausüben soll.

Weitere Merkmale der Erfindung ergeben sich aus den Unteransprüchen sowie der nachfolgenden Beschreibung eines bevorzugten Ausführungsbeispiels anhand der Figuren.

### Kurze Beschreibung der Zeichnungsfiguren

Figur 1 zeigt ein bevorzugtes Ausführungsbeispiel der Erfindung in schematischer Ansicht.
Die Figuren 2 bis 4 zeigen beispielhaft eine mögliche Ausgestaltung des Fahrwerkkörpers nach der Erfindung, wobei ein seitliches Zusatzrad verwendet wird.

### Beschreibung der Ausführungsarten

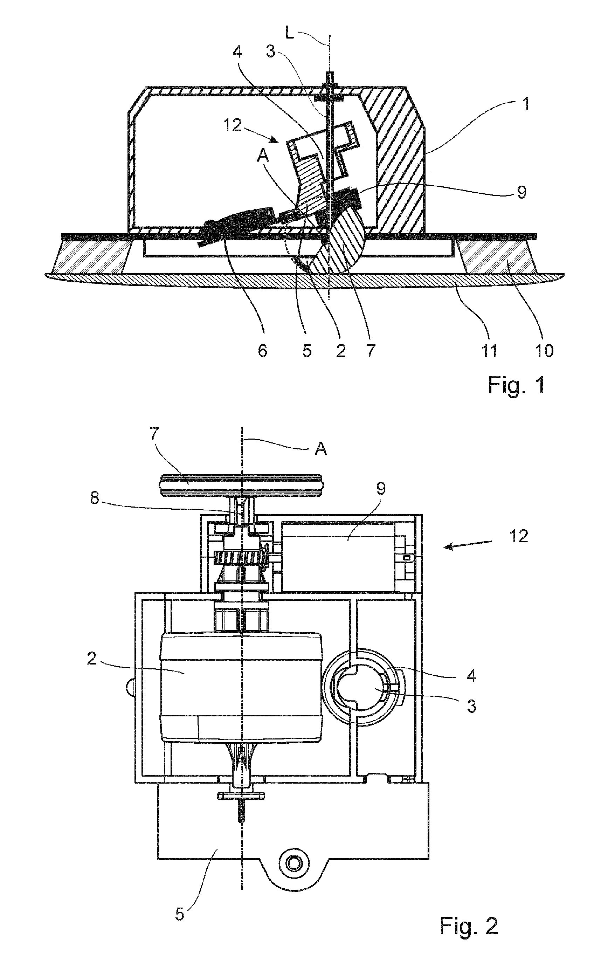

Das in Figur 1 dargestellte Flächenbehandlungsgerät weist einen Träger 1 auf, der im Inneren einen Hohlraum aufweist. In diesem Hohlraum ist ein Antriebselement 12 mit einem Motor 9 angeordnet, der seine Antriebskraft über ein Antriebsrad 2, das durch einen Durchbruch im Boden des Flächenbehandlungsgerätes zur behandelnden Fläche 11 geführtist, auf die zu behandelnde Fläche 11 überträgt. Im vorderen und hinteren Bereich ist das Arbeitselement 10, hier in Form eines bürstenartigen Mobs, dargestellt. Grundsätzlich kann als Arbeitselement 10 jedes zur Reinigung, Pflege oder Bearbeitung mögliche Element genutzt werden. Dies können Bürsten, statische Tücher, Schwämme oder auch abrasive Oberflächen, wie zum Beispiel Schleifpapier, sein.

Der Motor 9 ist an einem Fahrwerkskörper 5 angeordnet und über eine Bedieneinheit 6 bedienbar. Diese Bedieneinheit 6 wiederum kann über einen Durchlass (nicht gezeigt) von außen betätigt werden. Alternativ könnte eine solche Bedienung auch über eine Datenfernübertragung, etwa über eine Fernbedienung oder über einen Computer, erfolgen.

Der Fahrwerkskörper 5 ist über eine Lenkwelle 3 mit dem Träger 1 des Flächenbehandlungsgerätes verbunden. Im dargestellten Ausführungsbeispiel ist die Lenkwelle 3 fest mit dem Träger 1 verbunden, der Fahrwerkskörper 5 ist in einem Lenkwellenlager 4 an der Lenkwelle 3 um eine Lenkachse L beweglich gelagert.

Damit das Flächenbehandlungsgerät selbsttätig und willkürlich eine Fläche 11 abfahren kann, also willkürlich seine Bewegungsrichtung verändert, ist das Lenkwellenlager 4 als Taumellager ausgebildet. Im vorliegenden Beispiel bedeutet dies, dass dieses Taumellager von einem hohlzylindrischen Durchlass gebildet ist, durch den die Lenkwelle 3 geführt ist. Dies führt dazu, dass der Fahrwerkskörper 5 in der Lagerung beweglich ist und nicht definiert gelagertist.

Da gleichzeitig das Antriebsrad 2 einen Vorlauf bzw. einen Nachlauf aufweist, also mit seiner Auflagefläche auf der zu behandelnden Fläche 11 außerhalb der Lenkachse L angeordnet ist, entsteht ein instabiler Zustand, der zu einer willkürlichen Richtungsänderung führt, insbesondere aber das Flächenbehandlungsgerät in die Lage versetzt, bei Anstoßen an ein Hindernis durch eine entsprechende Eigenbewegung des Fahrwerkträgers 5 in eine neue Richtung zu verfahren.

Im dargestellten Ausführungsbeispiel ist das Antriebsrad 2 als klassisches Rad ausgebildet. Hier kommen auch alle anderen Formen von Antriebselementen in Betracht, insbesondere kann das Antriebsrad 2 auch eine Kugel oder eine Walze sein.

Damit sich das Flächenbehandlungsgerät nicht in einer Ecke oder an einer Wand selbst blockiert ist erfindungsgemäß das Zusatzrad 7 vorgesehen. Dieses Zusatzrad 7 ist über eine Achsverlängerung 8 mit der um die Antriebsachse A drehbaren Welle verbunden, auf der wiederum das Antriebsrad 2 angeordnet ist.

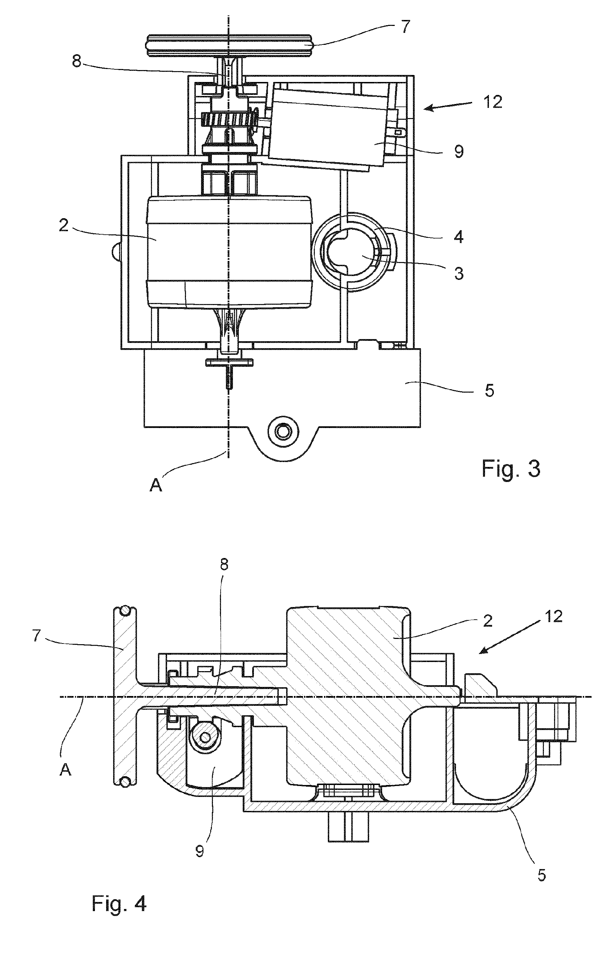

Die Figuren 2, 3 und 4 zeigen den Fahrwerkskörper 5 des in Figur 1 dargestellten Flächenbehandlungsgerätes in schematischen Detailansichten. Wie insbesondere aus den Figuren 2 und 3 zu erkennen ist, ist das Antriebsrad 2 als vergleichsweise dickes Rad in der Mitte des Fahrwerkkörpers 5 vorgesehen. Es wird über einen Motor 9 angeordnet, die Figuren 2 und 3 zeigen unterschiedliche Anordnungen dieses Motors 9.

Die Antriebsachse A ist im Fahrwerkskörper 5 drehbar gelagert, der Fahrwerkskörper wiederum ist über das Lenkwellenlager 4 und die darin gehaltene Lenkwelle 3 dem in den Figuren 2-4 nicht sichtbaren Träger 1 (vergleiche Figur 1) verbunden. Zur Realisierung des Antriebs ist auf der Antriebsachse A ein Antriebsritzel vorgesehen, das mit einer entsprechenden Schnecke des Motors 9 zusammen wirkt. Auf der dem Antriebsrad 2 abgewandten Seite der Antriebsachse A ist eine zusätzliche Achsverlängerung 8 vorgesehen, auf der das Zusatzrad 7 angeordnet ist.

Im gezeigten Ausführungsbeispiel ist, wie am besten aus Figur 4 ersichtlich ist, die Achsverlängerung 8 und das Zusatzrad 7 von einem gemeinsamen Kunststoffbauteil gebildet. Das Kunststoffbauteil ist in die hohlzylindrischen Antriebsachse A eingesteckt und axial zu dieser verschiebbar.

Grundsätzlich könnte das Zusatzrad 7 auch fest mit der Antriebsachse A verbunden sein, auch dies würde bereits einen zusätzlichen Antriebseinfluss mit sich bringen, der im Falle eines vor dem Flächenbehandlungsgerät stehenden Hindernisses dafür Sorge tragen kann, dass sich das Flächenbehandlungsgerät relativ zum Hindernis schräg stellt und so wieder frei kommt. Durch die zusätzlichen Einflüsse, die die axiale Verschiebbarkeit und möglicherweise auch eine gewollte Unwucht des Zusatzrades auf den Fahrwerkträgers ausüben, kann dieser Effekt aber wesentlich verstärkt werden.

### Liste der Bezugszeichen

- 1: Träger
- 2: Antriebsrad
- 3: Lenkwelle
- 4: Lenkwellenlager
- 5: Fahrwerkskörper
- 6: Bedienelement
- 7: Zusatzrad
- 8: Achsverlängerung
- 9: Motor
- 10: Arbeitselement
- 11: Fläche
- 12: Antriebselement
- A: Antriebsachse
- L: Lenkachse

## Patentansprüche

1. Selbsttätig und willkürlich eine Fläche (11) abfahrendes, mobiles Flächenbehandlungsgerät zur reinigenden, pflegenden oder bearbeitenden Behandlung der Fläche (11), mit
• zumindest einem, an einem Träger (1) angeordneten Arbeitselement (10) zur Behandlung der Fläche (11) und mit
• zumindest einem, über einen Motor (9) angetriebenen, hinsichtlich der Lenkung instabilen Antriebselement (12), das mit dem Träger (1) beweglich verbunden ist und den Träger (1) selbsttätig in verschiedene Richtungen über die Fläche (11) zu bewegen vermag,
wobei das Antriebselement (12) einen Fahrwerkskörper (5) mit einer von dem Motor (9) angetriebenen Antriebsachse (A) mit wenigstens einem Antriebsrad (2) aufweist, der über ein Lenkwellenlager (4) und eine Lenkwelle (3) mit dem Träger (1) verbunden ist und um eine Lenkachse (A) drehbar sowie derart ausgebildet oder gelagert ist, dass zur Bildung eines Vorlaufs die Lauffläche des Antriebsrades (2) auf der Fläche (11) außerhalb der Lenkachse (A) liegt, und wobei das Lenkwellenlager (4) als Taumellager ausgebildetist, in dem die Lenkwelle (3) gehalten ist und um das die Lenkwelle (3) schwenkbar ist, **dadurch gekennzeichnet, dass**
die Antriebsachse (A) eine Achsverlängerung (8) aufweist, an der ein Zusatzrad (7) angeordnetist, das relativ zum Antriebsrad (2) wenigstens in zur Antriebsachse (A) axialer Richtung beweglich ist.

2. Mobiles Flächenbehandlungsgerät nach Anspruch 1, **dadurch gekennzeichnet, dass** die Achsverlängerung (8) als separate Antriebswelle ausgebildet ist, die mit der Antriebsachse (A) verbunden ist.

3. Mobiles Flächenbehandlungsgerät nach Anspruch 2, **dadurch gekennzeichnet, dass** die die Achsverlängerung (8) bildende Antriebswelle über einen axialen Spielsitz mit der Antriebsachse (A) verbunden ist.

4. Mobiles Flächenbehandlungsgerät nach Anspruch 2 oder 3, **dadurch gekennzeichnet, dass** das Zusatzrad (7) axialverschiebbar auf der Achsverlängerung (8) gelagert ist.

5. Mobiles Flächenbehandlungsgerät nach einem der vorhergehenden Ansprüche, **dadurch gekennzeichnet, dass** die Abrollrichtung des Zusatzrades (7) zur Abrollrichtung des Antriebsrad (2) verschieden ist.

6. Mobiles Flächenbehandlungsgerät nach einem der vorhergehenden Ansprüche, **dadurch gekennzeichnet, dass** die die Achsverlängerung (8) bildende Antriebswelle biegsam und elastisch ausgebildet ist.

7. Mobiles Flächenbehandlungsgerät nach einem der vorhergehenden Ansprüche, **dadurch gekennzeichnet, dass** die Antriebswelle als zumindestim Endbereich hohle Welle ausgebildetist, wobei die Achsverlängerung (8) in den hohlzylindrischen Endbereich der Antriebswelle verschiebbar eingesteckt ist.

8. Mobiles Flächenbehandlungsgerät nach einem der vorhergehenden Ansprüche, **dadurch gekennzeichnet, dass** der Fahrwerkskörper (5) von einem Antriebsblock gebildet ist, in dem das Antriebsrad (2) gelagert ist und der den Motor (9) aufweist, wobei das Antriebsrad (2) mit seiner Lauffläche nach unten von der Unterseite des Antriebsblocks in Richtung der Fläche (11) hervorspringt und wobei das Zusatzrad (7) seitlich neben dem Antriebsblock angeordnet und auf der aus dem Antriebsblock herausgeführten Achsverlängerung (8) angeordnetist.

9. Mobiles Flächenbehandlungsgerät nach dem vorhergehenden Anspruch, **dadurch gekennzeichnet, dass** der Träger (1) kuppelförmig ausgebildet ist, wobei der Fahrwerkskörper (5) innerhalb der Kuppel und das Zusatzrad (7) zwischen der innen Seite des Trägers (1) und dem Antriebsblock angeordnet ist, wobei die Achsverlängerung (8) mit einem Bereich in die Antriebsachse eingesteckt ist, der länger als der Abstand der Innenseite des Trägers (1) zum Fahrwerkskörper (5) ist, so dass die Innenseite des Trägers (1) einen Anschlag für die axiale Beweglichkeit des Zusatzrades (7) bildet.

10. Mobiles Flächenbehandlungsgerät nach einem dervorhergehenden Ansprüche, **dadurch gekennzeichnet, dass** das Zusatzrad (7) eine statische Unwucht aufweist.

11. Mobiles Flächenbehandlungsgerät nach einem der vorhergehenden Ansprüche, **dadurch gekennzeichnet, dass** die Lauflächen des Antriebsrades (2) und des Zusatzrades (7) unterschiedliche Reibwerte aufweisen.

12. Mobiles Flächenbehandlungsgerät nach einem dervorhergehenden Ansprüche, **dadurch gekennzeichnet, dass** äußere, ringförmige Laufläche des Antriebsrades (2) relativ zur Drehebene des Antriebsrades (2) uneben ist und von der Drehebene des Antriebsrades (2) periodisch vor- und zurückspringt.

13. Mobiles Flächenbehandlungsgerät nach einem der vorhergehenden Ansprüche, **dadurch gekennzeichnet, dass** äußere, ringförmige Laufläche des Zusatzrades (7) relativ zur Drehebene des Antriebsrades (2) uneben ist und von der Drehebene des Zusatzrades (7) periodisch vor- und zurückspringt.

14. Mobiles Flächenbehandlungsgerät nach einem der vorhergehenden Ansprüche, **dadurch gekennzeichnet, dass** das Zusatzrad (7) eine Dicke von weniger als 10mm und das Antriebsrad (2) eine Dicke von mehr als 20mm aufweisen.

15. Mobiles Flächenbehandlungsgerät nach einem der vorhergehenden Ansprüche, **dadurch gekennzeichnet, dass** die die Achsverlängerung (8) bildende Antriebswelle unabhängig von der Antriebsachse (A) im Fahrwerkskörper gelagert ist und über eine Kraftübertragung mit der Antriebsachse (A) verbunden ist.
